# EUROPÄISCHE PATENTSCHRIFT

(11) **EP 0 989 398 B1**
(45) Veröffentlichungstag und Bekanntmachung des Hinweises auf die Patenterteilung: **29.06.2011**
(21) Anmeldenummer: 99250338.3
(22) Anmeldetag: 24.09.1999
(51) Int. Cl.: G01N 21/27

(54) **Vorrichtung zur Messung oder visuellen Abmusterung der Farbe oder von Farbeffekten von Oberflächen**
Device for the measurement or visual matching of colour or colour effects of surfaces
Appareil pour la mesure ou le contre-typage visuel de la couleur d'une surface

(30) Priorität: 25.09.1998 DE 19844053
(43) Veröffentlichungstag der Anmeldung: 29.03.2000
(73) Patentinhaber: Forchheim & Willing GmbH, 09221 Neukirchen b. Chemnitz (DE)
(72) Erfinder: Willing, Achim, 96110 Schesslitz-Doschendorf (DE)
(74) Vertreter: Pfenning, Meinig & Partner GbR

(56) Entgegenhaltungen:
- EP-A- 0 497 747
- WO-A-98/08078
- US-A- 5 604 586
- DATABASE INSPEC [Online] THE INSTITUTION OF ELECTRICAL ENGINEERS, STEVENAGE, GB September 2004 WEIBRING P ET AL: 'Multicomponent chemical analysis of gas mixtures using a continuously tuneable lidar system' Database accession no. 8214639 & APPLIED PHYSICS B (LASERS AND OPTICS) SPRINGER-VERLAG GERMANY Bd. B79, Nr. 4, Seiten 525 - 530 ISSN: 0946-2171
- DATABASE INSPEC [Online] THE INSTITUTION OF ELECTRICAL ENGINEERS, STEVENAGE, GB 2003 SENFT D C ET AL: 'Comparison of radiometric and chemical detection sensitivities for heterodyne and direct detection DIAL' Database accession no. 7964777 & CHEMICAL AND BIOLOGICAL STANDOFF DETECTION 28-30 OCT. 2003 PROVIDENCE, RI, USA Bd. 5268, Nr. 1, PROCEEDINGS OF THE SPIE - THE INTERNATIONAL SOCIETY FOR OPTICAL ENGINEERING SPIE-INT. SOC. OPT. ENG USA, Seiten 144 - 154 ISSN: 0277-786X
- DATABASE COMPENDEX [Online] ENGINEERING INFORMATION, INC., NEW YORK, NY, US 1996 PETRIN ROGER R ET AL: 'Atmospheric effects on CO2 differential absorption lidar performance' Database accession no. EIX96443330578 & INTERNATIONAL GEOSCIENCE AND REMOTE SENSING SYMPOSIUM (IGARSS) 1996 IEEE, vol. 1, 1996, pages 393-395,
- QUAGLIANO J R ET AL: "Spectroscopic analysis of infrared DIAL measurements", PROCEEDINGS OF THE INTERNATIONAL SOCIETY FOR OPTICAL ENGINEERING (SPIE), SPIE, USA, vol. 2702, 31 January 1996 (1996-01-31), pages 16-27, XP002561731, ISSN: 0277-786X
- DONOVAN D P ET AL: "Principal component analysis applied to multiwavelength lidar aerosol backscatter and extinction measurements", APPLIED OPTICS, OPTICAL SOCIETY OF AMERICA, US, vol. 36, no. 36, 20 December 1997 (1997-12-20), pages 9406-9424, XP002561732, ISSN: 0003-6935
- DAVIDSON C E ET AL: "Simultaneous Extraction of Temporal, Spatial, and Spectral Information from Multi-Wavelength Lidar Data", AEROSPACE CONFERENCE, 2007 IEEE, IEEE, PISCATAWAY, NJ, USA, 3 March 2007 (2007-03-03), pages 1-9, XP031214196, ISBN: 978-1-4244-0524-4
- PANNE U: "Laser remote sensing", TRAC, TRENDS IN ANALYTICAL CHEMISTRY, ELSEVIER, AMSTERDAM, NL, vol. 17, no. 8-9, 9 August 1998 (1998-08-09), pages 491-500, XP004146610, ISSN: 0165-9936, DOI: DOI:10.1016/S0165-9936(98)00054-5
- DATABASE INSPEC [Online] THE INSTITUTION OF ELECTRICAL ENGINEERS, STEVENAGE, GB 1999 KELLY B T ET AL: 'Conceptual design of an acquisition, processing, and control system for a semi-autonomous airborne differential absorption lidar system' Database accession no. 6443411 & LASER RADAR TECHNOLOGY AND APPLICATIONS IV 6-9 APRIL 1999 ORLANDO, FL, USA Bd. 3707, PROCEEDINGS OF THE SPIE - THE INTERNATIONAL SOCIETY FOR OPTICAL ENGINEERING SPIE-INT. SOC. OPT. ENG USA, Seiten 156 - 164 ISSN: 0277-786X
- DATABASE INSPEC [Online] THE INSTITUTION OF ELECTRICAL ENGINEERS, STEVENAGE, GB 1996 PETRIN R R ET AL: 'Atmospheric effects on CO2 differential absorption lidar performance' Database accession no. 5385272 & IGARSS '96. 1996 INTERNATIONAL GEOSCIENCE AND REMOTE SENSING SYMPOSIUM 27-31 MAY 1996 LINCOLN, NE, USA Bd. 1, IGARSS '96. 1996 INTERNATIONAL GEOSCIENCE AND REMOTE SENSING SYMPOSIUM. REMOTE SENSING FOR A SUSTAINABLE FUTURE (CAT. NO.96CH35875) IEEE NEW YORK, NY, USA, Seiten 393 - 395 VOL.1 ISBN: 0-7803-3068-4

## Beschreibung

Die Erfindung betrifft eine Vorrichtung zur visuellen Abmusterung oder alternativ zur berührungslosen Messung von Proben nach Anspruch 1, wobei auch von der Richtung der Beobachtung abhängige Effekte erfasst werden sollen.

Es sind Vorrichtungen zur Farbmessung und zur Farbabmusterung bekannt, wobei bei der üblichen Farbmessung von einer relativ zum Meßgerät feststehenden Probe ausgegangen wird, die aus verschiedenen definierten Winkeln beleuchtet und meist senkrecht zur Oberfläche beobachtet wird. Bei diesen Vorrichtungen werden die Meßgeräte in unmittelbarer Nähe der Probenoberfläche angeordnet und nur sehr kleine Oberflächenanteile werden betrachtet. Zur Farbabmusterung kleinerer Proben sind kleine Beleuchtungskabinen, z.B. auf Tischen angeordnete Kabinen üblich, in denen eine stationäre Beleuchtung zur Beleuchtung der Proben angebracht ist. Um die unterschiedlichen Farbeffekte zu erkennen, werden die Probenoberflächen, üblicherweise eine zu messende Probe und eine Referenzprobe, einem Beobachter unter unterschiedlichen Winkeln präsentiert und somit auch aus jeweils unterschiedlichen Winkeln beleuchtet. Diese Methode hat den Nachteil einer schlechten Reproduzierbarkeit, weil sowohl die Beleuchtungswinkel als auch die Beobachtungswinkel in verschiedenen Beobachtungssituationen sich ändern, insbesondere Farbeffekte schwer zu erkennen sind, außerdem können nur sehr kleine Proben abgemustert werden.

Eine Vorrichtung zur visuellen Inspektion der Oberflächenbeschaffenheit von Abmusterungsflächen größerer Beschaffenheit, insbesondere von lackierten Karosserien, ist in der Druckschrift WO 98/08078 beschrieben. Aus der US 56 04 586 ist eine Vorrichtung zur Farbabmusterung bekannt, die eine konkav geformte Platte zur Aufnahme einer abzumusternden Probe aufweist. Weiterhin ist ein ebenfalls konkav gekrümmter Probenhalter für eine Vergleichsprobe vorgesehen, der um eine gemeinsame Evolute der Fläche der Platte und der Fläche des Probenhalters schwenkbar ist. Über den Proben ist eine Flächenbeleuchtungsvorrichtung angeordnet, deren abstrahlende Fläche konvex ist und die mit gleichmäßigem und diffusem Licht vorgegebener Intensität die Proben bestrahlt.

Aufgabe der Erfindung ist es, eine Vorrichtung zur Messung oder visuellen Abmusterung für kleine und mittelgroße ebene oder leicht gekrümmte Proben zu finden, die reproduzierbare und eindeutig definierte unterschiedliche Beobachtungsbedingungen bei genügend gleichen Beleuchtungsbedingungen ermöglicht und die unter gleichen Bedingungen sowohl für eine visuelle Abmusterung als auch für Farbmessungen geeignet ist.

Diese Aufgabe wird erfindungsgemäß durch die Merkmale des Hauptanspruchs gelöst.

Bei der erfindungsgemäßen Vorrichtung wird von einem festen Beobachterstandort ausgegangen. Von diesem Standort aus wird ein Oberflächenelement auf der Probe, bzw. der Zusammenstellung mehrerer Proben an deren aneinander grenzenden Kanten betrachtet, vorzugsweise in einer Grundstellung aus Richtung der normalen des Oberflächenelements. Durch die Position der Probe ist eine Ebene festgelegt, in der sich die Probe befindet. Eine Änderung des Beobachtungswinkels wird gemäß der Erfindung dadurch bewirkt, daß die Probe in einer linearen Richtung verschoben wird, bis der gewünschte Beobachtungswinkel als Winkel zwischen Beobachtungsrichtung und der Normalen auf der Probe bzw. dem Oberflächenelement erreicht ist. Entsprechend den üblichen Festlegungen in vielen Farbmusterungsvorschriften wird die Probe in ihrer Grundposition auf übliche Weise schräg, vorzugsweise unter 45° beleuchtet. Dies kann durch einen quasi parallelen, bzw. durch einen eng gebündelten Strahlengang erfolgen, z.B. mit punktförmigen Lampen und Parabolreflektoren. Besonders vorteilhaft jedoch und mit hoher Korrelation zu dem Beleuchtungsbedingungen im Freien ist ein Strahlengang, der nur in einer Hauptebene eng gebündelt ist. Derartige Lichtverteilungen sind durch lineare Lichtquellen zu erzeugen.

Erfindungsgemäß wird nun die gesamte Fläche, in der sich die Probe oder Teile der Probe befinden können, an jeder Stelle aus jeweils der gleichen schrägen Richtung beleuchtet. Dies bedeutet, daß die Beleuchtungsverhältnisse auf der Probe auch bei Verschiebung konstant bleiben, wodurch eine reproduzierbare und Beobachtungswinkel-abhängige Abmusterung gewährleistet wird.

Bei Verwendung linearer Lichtquellen ist die Hauptebene der Ausstrahlung, in der die maximale Bündelung erreicht wird, diejenige Ebene, die die Normale auf der Probe und die Verschiebungsgerade der Probe enthält. Die Längsachsen der Leuchten bzw. Lichtquellen verlaufen senkrecht zu dieser Hauptebene. Bei senkrechter Anordnung der Probe und horizontaler Verschiebung ergeben sich somit senkrecht ausgerichtete Leuchten parallel zur Probe. Bei ebenfalls senkrechter Anordnung der Probe, jedoch vertikaler Verschiebung, ergeben sich waagerecht ausgerichtete Leuchten parallel zur Probe. Diese können beispielsweise an der Decke oder auch an Seitenwänden montiert sein.

Die Lampen, gegebenenfalls mit entsprechender Filterung, werden insbesondere zur visuellen Abmusterung so ausgewählt, daß ihre spektrale Verteilung vorgegebenen Bedingungen entspricht, z.B. einer Farbtemperatur von 6500 K und ausreichend großem Metamerieindex zum Tageslicht. Dies wird beispielsweise von bestimmten Leuchtstofflampen geleistet.

Bei gleicher Geometrie kann erfindungsgemäß das Auge des Beobachters durch eine Sensoroptik ersetzt werden, deren Optik die Strahldichte der Probe spektral bewertet.

Ausführungsbeispiele der Erfindung sind in der Zeichnung dargestellt und werden in der nachfolgenden Beschreibung näher erläutert. Es zeigen
- Fig. 1: eine perspektivische Darstellung der erfin- dungsgemäßen Anordnung, die als Lichtkabine realisiert sein kann, mit vertikaler Ver- schiebung der Probe,
- Fig. 2: einen senkrechten Schnitt durch die Anord- nung nach Fig. 1,
- Fig. 3: eine perspektivische Darstellung der erfin- dungsgemäßen Anordnung mit waagerechter Ver- schiebung der Probe, und
- Fig. 4: eine Draufsicht auf die Anordnung nach Fig. 3.

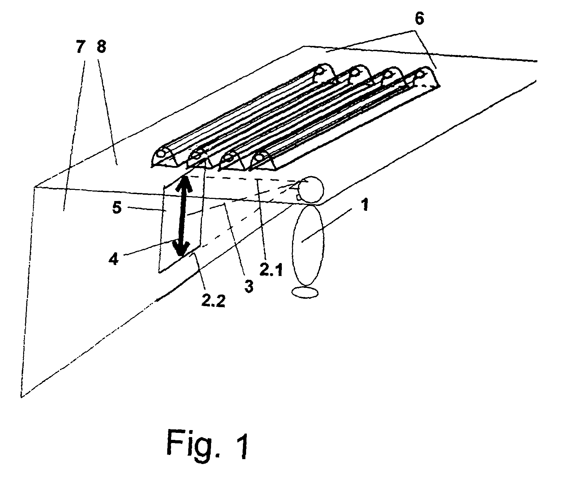

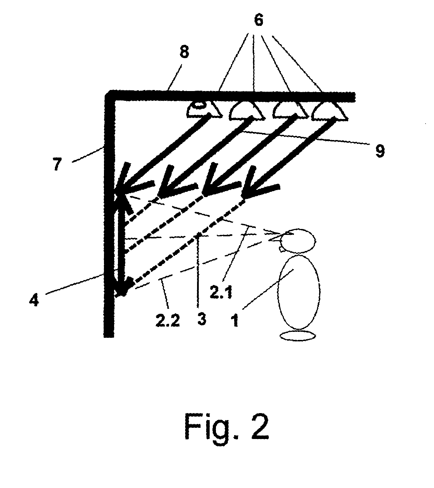

In Fig. 1 und Fig. 2 ist eine erste Anordnung der Vorrichtung zur Messung und visuellen Abmusterung dargestellt, die als Lichtkabine ausgebildet sein kann oder aber in einem Raum aufgenommen sein kann. In beiden Fällen stellen eine senkrechte Wand 7 und eine Decke 8 die Begrenzungswände der Lichtkabine oder des Raumes dar. Auf der senkrechten Wand 7 ist ein vertikal ausgedehntes Feld 5 angedeutet, das zur Aufnahme einer Probe oder mehrerer Proben in Nebeneinanderlage dient. Mittel zur Aufnahme und Befestigung der Proben sind nicht näher dargestellt, aber in bekannter Weise vorhanden. Die Probe ist auf dem vertikalen Feld 5 entsprechend einem die Verschieberichtung angebenden Pfeil 4 nach oben und unten verschiebbar. An der Decke 8 sind parallel zur Wand langgestreckte Leuchten 6, bestückt mit Leuchtstofflampen und entsprechenden Reflektoren befestigt, die derart ausgebildet sind, daß sie in Ebenen quer zu der jeweiligen Lampenachse, der Hauptstrahlebene, eng bündelnd sind und das vertikale Feld 5 näherungsweise unter einem Winkel von 45° bestrahlen, wie durch einen die Hauptstrahlrichtung angebenden Pfeil 9 angedeutet ist.

Ein Beobachter kann unter unterschiedlichen Winkeln auf die Proben blicken. Die Richtung 3 gibt eine Grundposition aus der Richtung der Normalen, d.h. senkrecht zur Probenoberfläche an, eine Richtung 2.1 bestimmt einen Winkel bis zu 30° zur Normalen auf der Probe oder 15° vom Glanz und eine Beobachtungsrichtung 2.2 gibt wiederum einen Winkel von 30° zur Normalen oder 75° vom Glanz an, wobei 0° vom Glanz den direkten Einblick in die Leuchten über die spiegelnde Oberfläche der Probe bedeutet.

Üblicherweise werden die Proben, z.B. abzumusternde Probe und Referenzprobe so angebracht, daß der Beobachter 1 entsprechend Richtung 3 als Grundposition die Proben betrachtet. Anschließend werden sie entsprechend dem Verschiebeweg 4 verschoben und wieder betrachtet. Die Proben werden nach der Verschiebung jeweils aus immer gleicher Richtung und mit der gleichen Beleuchtungsstärke wie vorher von den Leuchten 6 beleuchtet, wodurch gegebenenfalls Abmusterungsfehler der Probe im Vergleich zur Referenzprobe genau und zuverlässig erkannt werden können. Selbstverständlich kann auch nur eine Probe oder eine Mehrzahl von Proben betrachtet werden.

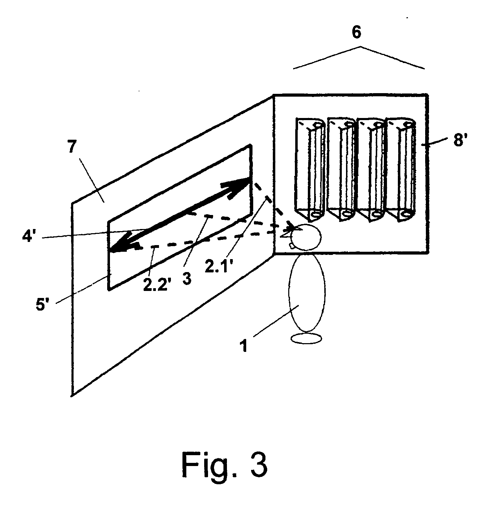

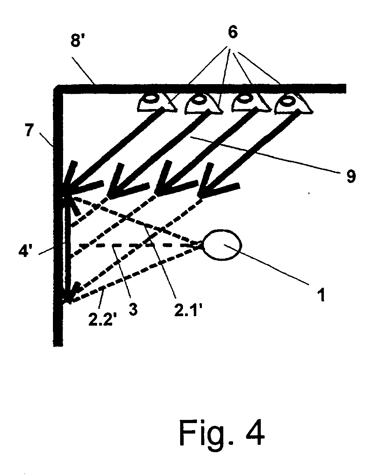

In den Figuren 3 und 4 ist ein weiteres Ausführungsbeispiel dargestellt, bei dem Proben auf einem waagerecht sich erstreckenden Feld 5' aufgenommen und entsprechend einer waagerechten Verschieberichtung 4' verschiebbar sind. Die Probe wird bei einer Verschiebung über die gesamte Fläche 5' aus immer gleicher Richtung von den Leuchten 6 beleuchtet, die in diesem Ausführungsbeispiel an einer weiteren Seitenwand 8' parallel zur Wand 7 befestigt und senkrecht ausgerichtet sind. In Ebenen quer zur Lampenachse, also in horizontaler Ebene, der Hauptstrahlebene, sind die Leuchten eng bündelnd und bestrahlen die Probe näherungsweise unter einem Winkel von 45°. Der Beobachter 1 kann unter unterschiedlichen Winkeln auf die Probe blicken, Richtung 3 senkrecht zur Probenoberfläche, Richtung 2.2' im Winkel bis zu 30° zur Normalen auf der Probe oder 75° vom Glanz, sowie der Richtung 2.1' wiederum 30° zur Normalen oder 15° vom Glanz.

Ansonsten entspricht die Anordnung und Funktionsweise derjenigen nach den Fign. 1 und 2.

Anstelle des Beobachters 1 kann auch eine elektronische und/oder elektrooptische Erfassungs- und Meßvorrichtung vorgesehen sein, über die direkt die Farbe der Probe gemessen wird.

In den beschriebenen Ausführungsbeispielen sind die Leuchten 6 ortsfest an der Decke 8 bzw. der Seitenwand 8' angeordnet. Sie können jedoch bei gleichbleibender geometrischer Zuordnung mit der bzw. den Proben verschoben werden.

## Patentansprüche

1. Vorrichtung zur Messung oder visuellen Abmusterung der Farbe oder von Farbeffekten eines ebenen oder leicht gekrümmten Oberflächenelementes als Teil der Oberfläche einer ebenen oder leicht gekrümmten Probe, bei der die Probe mit dem Oberflächenelement in einer Ebene längs einer Geraden senkrecht zur Normalen des Oberflächenelementes verschiebbar ist (4) und das Oberflächenelement von einem festen Standort aus vor und nach der Verschiebung aus unterschiedlichen Beobachtungswinkeln beobachtbar ist und bei der eine Beleuchtungsvorrichtung (6) vorgesehen ist, wobei eine Lichtverteilung der Beleuchtungsvorrichtung in einer Ebene, die die Normale des Oberflächenelementes und die Verschiebegerade enthält, eine Hauptstrahlrichtung (9) schräg zur Normalen des Oberflächenelementes besitzt,
**dadurch gekennzeichnet,**
**dass** eine senkrechte Wand (7) vorhanden ist, an welcher die Probe an einer Vorrichtung befestigbar ist, wobei das Oberflächenelement sichtbar ist, und die an der Vorrichtung befestigte Probe entlang der Gerade in einer begrenzten Fläche (5) auf der senkrechten Wand verschiebbar ist und innerhalb der begrenzten Fläche (5) durch die Beleuchtungsvorrichtung (6) im Wesentlichen mit gleicher Beleuchtungsstärke und aus gleicher Richtung beleuchtbar ist.

2. Vorrichtung nach Anspruch 1, **dadurch gekennzeichnet, dass** die Lichtverteilung eine Hauptausstrahlrichtung (9) von 45° zur Normalen des Oberflächenelements besitzt.

3. Vorrichtung nach einem der Ansprüche 1 bis 2,
**dadurch gekennzeichnet, dass** die Lichtverteilung der Beleuchtungsvorrichtung (6) in der Ebene eng gebündelt ist, die die Normale des Oberflächenelements und die Verschiebegerade enthält.

4. Vorrichtung nach einem der Ansprüche 1 bis 3,
**dadurch gekennzeichnet, dass** die Beleuchtungsvorrichtung (6) aus mindestens einer langgestreckten Leuchte besteht, die parallel zur Ebene, in der die Probe verschoben wird, ausgerichtet ist und senkrecht die Ebene, die die Oberflächennormale und die Verschiebegerade enthält, durchstößt.

5. Vorrichtung nach einem der Ansprüche 1 bis 4,
**dadurch gekennzeichnet, dass** die Beleuchtungsvorrichtung (6) ortsfest ist.

6. Vorrichtung nach einem der Ansprüche 1 bis 5,
**dadurch gekennzeichnet, dass** die Beleuchtungsvorrichtung (6) mit gleichbleibender geometrischer Zuordnung mit der Probe verschiebbar ist.

7. Vorrichtung nach einem der Ansprüche 1 bis 6,
**dadurch gekennzeichnet, dass** der Verschiebebereich der Probe so definiert ist, dass bei dem festen Standort (1) des Beobachters alle für die Beurteilung der Proben nötigen Winkel vom Glanz zwischen 15° und 75° einstellbar sind.

8. Vorrichtung nach einem der Ansprüche 1 bis 7,
**dadurch gekennzeichnet, dass** an dem festen Standort (1) eine elektronische und/oder elektrooptische Messvorrichtung angeordnet ist, mit der eine berührungslose Messung aus gleicher Richtung wie die visuelle Abmusterung durchführbar ist.

## Claims

1. Apparatus for the measurement or visual matching of the colour or colour effects of a flat or slightly curved surface element as part of the surface of a flat or slightly curved sample, in which the sample is displaceable (4) with the surface element in a plane along a straight line perpendicularly to the normal of the surface element, and the surface element can be observed from a fixed location from different directions of observation before and after displacement and in which a lighting apparatus (6) is provided, wherein the light distribution of the lighting apparatus in a plane containing the normal of the surface element and the straight line of displacement has a main beam direction (9) obliquely to the normal of the surface element, **characterised in that** a vertical wall (7) is provided at which the sample is fixable by means of a device, the surface element being visible, and the sample fixed at the device within a limited surface (5) is displaceable on the vertical wall along the straight line and is illuminated within the limited surface by the lighting apparatus (6) essentially with the same lighting intensity and from the same direction.

2. Apparatus according to claim 1, **characterised in that** the light distribution has a main beam direction (9) of 45° to the normal of the surface element.

3. Apparatus according to any of claims 1 to 2, **characterised in that** the light distribution of the lighting apparatus (6) focuses narrowly in the plane containing the normal of the surface element and the straight line of displacement.

4. Apparatus according to any of claims 1 to 3, **characterised in that** the lighting apparatus (6) consists of at least one elongate lamp which is oriented parallel to the plane in which the sample is displaced and perpendicularly penetrates the plane containing the surface normal and the straight line of displacement.

5. Apparatus according to any of claim 1 to 4, **characterised in that** the lighting apparatus (6) is stationary.

6. Apparatus according to any of claim 1 to 5, **characterised in that** the lighting apparatus (6) is displaceable with a constant geometrical coordination with the sample.

7. Apparatus according to any of claim 1 to 6, **characterised in that** the range of displacement of the sample is defined such that, with the fixed location (1) of the observer, all angles of the gloss needed to assess the samples are adjustable between 15° and 75°.

8. Apparatus according to any of claim 1 to 7, **characterised in that** at the fixed location (1) is arranged an electronic and/or electro optical measuring device, with which contactless measurement can be performed from the same direction as visual matching.

## Revendications

1. Dispositif de mesure ou d'appréciation visuelle de la couleur ou d'effets de couleur d'un élément de surface plan ou légèrement courbé comme partie de surface d'un échantillon plan ou légèrement courbé, dans lequel l'échantillon peut être coulissé (4) avec l'élément de surface, dans un plan, le long d'une droite perpendiculaire à la verticale de l'élément de surface et l'élément de surface peut être observé, depuis un point fixe, avant et après coulissement sous différents angles d'observation et dans lequel un dispositif d'éclairage (6) est prévu, dans lequel une diffusion de lumière du dispositif d'éclairage dans un plan, lequel contient la verticale de l'élément de surface et la droite de coulissement, présente une orientation de faisceau principale (9) en oblique par rapport à la verticale de l'élément de surface, **caractérisé en ce qu'**une paroi verticale (7) est présente, sur laquelle l'échantillon peut être fixé sur un dispositif, l'élément de surface étant visible et l'échantillon fixé sur le dispositif pouvant être coulissé, le long de la droite, à l'intérieur d'une surface limitée (5) sur la paroi verticale et pouvant être éclairé, à l'intérieur de la surface limitée (5), par le dispositif d'éclairage (6) avec sensiblement la même intensité d'éclairage et depuis la même direction.

2. Dispositif selon la revendication 1, **caractérisé en ce que** la diffusion de lumière présente une direction de rayons principale (9) inclinée de 45 ° par rapport à la verticale de l'élément de surface.

3. Dispositif selon l'une quelconque des revendications 1 à 2, **caractérisé en ce que** la diffusion de lumière du dispositif d'éclairage (6) est focalisée étroitement dans le plan qui contient la verticale de l'élément de surface et la droite de coulissement.

4. Dispositif selon l'une quelconque des revendications 1 à 3, **caractérisé en ce que** le dispositif d'éclairage (6) est constitué d'au moins une lampe allongée, qui est orientée parallèlement au plan dans lequel l'on fait coulisser l'échantillon et qui passe perpendiculairement à travers le plan qui contient la verticale de la surface et la droite de coulissement.

5. Dispositif selon l'une quelconque des revendications 1 à 4, **caractérisé en ce que** le dispositif d'éclairage (6) est fixe.

6. Dispositif selon l'une quelconque des revendications 1 à 5, **caractérisé en ce que** le dispositif d'éclairage (6) peut être coulissé avec l'échantillon dans une relation géométrique constante.

7. Dispositif selon l'une quelconque des revendications 1 à 6, **caractérisé en ce que** la zone de coulissement de l'échantillon est définie de sorte qu'au niveau du point fixe (1) de l'observateur, tous les angles de brillance nécessaires à l'appréciation des échantillons soient réglables entre 15 ° et 75 °.

8. Dispositif selon l'une quelconque des revendications 1 à 7, **caractérisé en ce qu'**au niveau du point fixe (1), un dispositif de mesure électronique et/ou électro-optique est disposé, qui permet d'effectuer une mesure sans contact depuis la même direction que l'appréciation visuelle.
